# EUROPEAN PATENT SPECIFICATION

(11) **EP 1 367 907 B1**
(45) Date of publication and mention of the grant of the patent: **28.02.2007**
(21) Application number: 02707977.1
(22) Date of filing: 13.03.2002
(51) Int. Cl.: A23L 1/064, A23L 1/068, A23P 1/16, A23L 1/0532, A23L 1/0524, A23L 1/164

(54) **AERATED FOOD COMPONENT**
BELÜFTETE NAHRUNGSMITTELKOMPONENTE
CONSTITUANT ALIMENTAIRE AEREE

(30) Priority: 13.03.2001 US 275376 P
(43) Date of publication of application: 10.12.2003
(73) Proprietor: KELLOGG COMPANY, Battle Creek, MI 49016-3599 (US)
(72) Inventor: KEPPLINGER, John, Portage, MI 49024 (US); BATH, Deirdre, Eileen, Battle Creek, MI 49017 (US)
(74) Representative: Becker Kurig Straus
(86) International application number: PCT/US2002/007460
(87) International publication number: WO 2002/071872

(56) References cited:
- WO-A-00/53024
- WO-A-01/22831
- GB-A- 1 531 219
- US-A- 5 451 419
- DATABASE WPI Section Ch, Week 197648 Derwent Publications Ltd., London, GB; Class D13, AN 1976-90129X XP002216398 & SU 504 534 A (MOSCOW NAT ECONOMY INST), 24 May 1976 (1976-05-24)
- DATABASE WPI Section Ch, Week 199401 Derwent Publications Ltd., London, GB; Class D13, AN 1994-004972 XP002216399 -& SU 1 780 690 A (VORON TECHN INST), 15 December 1992 (1992-12-15)

## Description

### BACKGROUND OF THE INVENTION

This invention relates generally to aerated food components useful for incorporation into convenient food products, baked goods or cereals and, more particularly, to aerated food components containing high levels of fruit. The aerated food components are versatile since their moisture content can be adjusted to allow for incorporation into a wide variety of foods.

In GB 1 531 219 a dehydrated food product and a process for its preparation is described. In such a food product sweetening agents, fruit products, gelling agents, calcium salts, acids, water, soluble salts and whipping agents are incorporated.

A whipped confectionary product and a method for its production is disclosed in SU 504 534. Said confectionary product contains a fruit base, a proteinaceous component, like apple and beet pectins, gelling agent, syrup, calcium lactate, sugar and water.

SU 1 780 690 describes the preparation of a marshmallow mass containing an apple pectin mixture, apple puree, buffer, egg white, edible acid and treacle.

An aerated food product and a method for its preparation is disclosed in WO 00/53024. The food product may contain a sweetening agent, fruit juice concentrate, hydrocolloids, calcium and whipping proteins. The moisture content of the food product may range from 1 to 30 % by weight.

WO 01/22831 describes the preparation of fluffy food products, e.g. a marshmallow. Such products contain a sweetening agent, syrup, hydrocolloids, food acids, a spacer salt and whipping protein.

It is very desirable to produce aerated food components that retain their crispness even after exposure to a liquid such as milk. In addition, it is desirable to incorporate high levels of fruit into these food components to increase their organoleptic and nutritional qualities. To date there has been limited success in meeting both of these goals. Generally, the crisper the aerated food component, the less fruit it includes and thus it has a lower taste. The present invention includes disclosure of formulations and processes necessary to produce a well-aerated food component that contains a high level of fruit. This food component can be combined with cereal as a semi-moist filling or dried to produce a cereal additive that remains crisp in a liquid. The invention can also produce a well-aerated food component that is semi-moist and can be incorporated into baked goods and granola bars. Since the density of this food component is low, substitution with the aerated food component on an equal volume basis could result in a reduction of product cost while delivering a new unique flavor and texture to the finished product.

### SUMMARY OF THE INVENTION

In general terms, this invention provides an aerated food component containing a high level of fruit and a method for making the same. The aerated food component can be incorporated into a food product as an aerated semi-moist gel. Alternatively, the aerated food component can be dried to form a crisp, aerated cereal additive, which does not form part of the invention.

In one embodiment, the invention is an aerated semi-moist gel comprising a mixture of a sweetener, a fruit concentrate, an ionic hydrocolloid, soluble calcium, an edible acid, a cation source, and a whipping protein;
wherein said semi-moist gel having a moisture content of from 14 to 30 % by weight based on the total weight and wherein said soluble calcium comprises dicalcium phosphate, calcium sulphate, calcium chloride, calcium citrate, calcium malate, calcium lactate, and mixtures thereof.

In another embodiment, the invention is a method for formation of an aerated semi-moist gel comprising the steps of: providing a sweetener slurry comprising water, a sweetener, and a fruit concentrate; adding to the sweetener slurry an ionic hydrocolloid, a soluble calcium, an edible acid, a cation, and a whipping protein to form a gel formulation; and mixing the gel formulation sufficiently to form an aerated semi-moist gel;
wherein said semi-moist gel having a moisture content of from 14 to 30 % by weight based on the total weight and wherein said soluble calcium comprises dicalcium phosphate, calcium sulphate, calcium chloride, calcium citrate, calcium malate, calcium lactate, and mixtures thereof.

These and other features and advantages of this invention will become more apparent to those skilled in the art from the detailed description of a preferred embodiment.

### BRIEF DESCRIPTION OF THE DRAWINGS

Not applicable.

### DETAILED DESCRIPTION OF A PREFERRED EMBODIMENT

The present invention is directed toward an aerated food component having a high fruit content. The present invention is also directed toward a method for producing the same. The aerated food component is a combination of the following ingredients: a sweetener; a fruit concentrate; an ionic hydrocolloid; a soluble calcium ion source; a whipping protein; an edible acid; water, and a cation source wherein said semi-moist gel having a moisture content of from 14 to 30 % by weight based on the total weight and wherein said soluble calcium comprises dicalcium phosphate, calcium sulphate, calcium chloride, calcium citrate, calcium malate, calcium lactate, and mixtures thereof. Optional additional ingredients include the following: colors; flavoring agents; starches; celluloses; and gums.

The aerated food component is initially processed into an aerated semi-moist gel having a moisture content of from 14 to 30 % by weight that can be used as a food component in a variety of consumer food products or further processed in a variety of ways into different food components. The aerated semi-moist gel can be formed into a marshmallow-like product having a high moisture level. The aerated semi-moist gel can be homogeneously mixed with cereal pieces to form a combined product or kept as a discrete piece in combination with cereal pieces. Similarly, the aerated semi-moist gel could be used as a binder agent in the formation of a cereal product like Rice Krispies Treats®. Additionally, the semi-moist gel can be dried for use in cereals and other food products. Finally, the aerated semi-moist gel can be extruded under a low pressure of from 34.5 to 586.2 kPa (5 to 85 pounds per square inch (psi)). The extrudate can be co-extruded with a dough or other covering and baked to an internal temperature of from 65.5 to 93.3°C (150 to 200°F). During the baking the gel expands and fully sets. Or the gel can be extruded into a shape, such as a rope or slab, and layered onto, for example, a granola bar, which is allowed to rest until the gel is fully set. Finally, the extruded shape can be allowed to rest until set and then cut into smaller pieces that are then dried to form a crisp, dried aerated cereal additive that can be incorporated into a variety of consumer food products. The components of the aerated cereal additive formulation and the method for producing it are more fully described below. Unless noted otherwise, all amounts are reported in weight percent based on the total weight of the aerated food component formulation.

A variety of sweeteners can be used in the aerated food component. These include sweeteners such as high fructose corn syrup (HFCS), corn syrup, invert syrup, sucrose, fructose, honey, and molasses. The sweetener is either combined with water or includes water to convert it into a syrup. The water within the sweetener is utilized to hydrate various components, including a whipping protein and an ionic hydrocolloid, as described below. The corn syrup can be provided in a variety of dextrose equivalent levels, such as dextrose equivalent (DE) 62 through 42. The HFCS can have a variety of fructose levels of from 35% to 85% fructose. Preferably, the HFCS is a 55% HFCS, meaning a syrup wherein 55 percent of the sweetener solids comprise fructose. In some formulations it can be advantageous to create a slurry from the sweeteners and water. Generally the amount of sweetener included in the aerated cereal piece formulation ranges from 10 to 90 % based on the total weight of the formulation, with the preferred range being from 50 to 70 % by weight. The sweetener may comprise, and preferably does comprise, a mixture of sweeteners. A preferred combination of sweeteners is a 50/50 weight percent combination of 55% HFCS and granulated sugar. Preferably, this combination of 55% HFCS and granulated sugar comprises approximately 70 weight percent of the total formulation.

One advantage of the present invention is its ability to allow for the incorporation of high levels of fruit concentrates. Preferably, the fruit concentrate comprises a puree of a desired fruit, but it can also comprise fruit juice, fruit juice concentrates, fruit powders, and combinations thereof. These concentrates preferably have a Brix value of from 20 to 65. Any of a variety of fruits can be utilized as a source of the puree and mixtures of various fruit concentrates can also be utilized. Generally, the amount of fruit concentrate utilized is in the range of from 1 to 80 percent based on the total weight of the formulation. The preferred range of fruit concentrate is from 5 to 20% with the most preferred being 5 to 10 % by weight. Those skilled in the art will realize that at high use levels of fruit, the amount of sweetener ingredients can be lowered to achieve an aerated fruit component that is made largely of fruit materials.

One important component in the formation of the aerated food component is the use of ionic hydrocolloids. These types of hydrocolloids can be found in a variety of vegetable, animal and synthetic sources. For the purposes of this disclosure and the accompanying claims, ionic hydrocolloids are to be defined as long chain polysaccharides containing acidic side chains. Examples of these side chains are acid forms of carboxylate and sulfate. These side chains can exist in a fully protonated state or as salts when exposed to cations. In solution, these ionic hydrocolloids have a net negative charge due to ionization of these acid residues. This net negative charge allows the interaction between the ionic hydrocolloids, proteins and cations to form stable aerated structures. Examples of these suitable ionic hydrocolloid compounds are alginates, carrageenan, or low methoxy pectin.

Alginates are defined as a polymer of D-mannuronic acid and L-guluronic acid residues. Examples of these are calcium alginate, sodium alginate, potassium alginate, or propylene glycol alginate. They are extracted from brown seaweed. In the present invention an especially preferred alginate is sodium alginate. Sodium alginates react with calcium salts to form insoluble calcium alginate. Preferably, the ionic hydrocolloid is utilized in an amount of from 0.1 to 5 percent, based on the total weight of the formulation.

Carrageenan is obtained by extraction of certain species of red seaweed with water or alkaline water. It is a hydrocolloid consisting mainly of the potassium, sodium, magnesium, and calcium sulfate esters of *d*-galactose and 3,6-anhydro-*d-*galactose copolymers. The relative proportions of cations existing in carrageenan may be changed during processing so that one may become predominant. The commercial products classified as carrageenan are frequently diluted with sugars for standardization purposes and also mixed with food grade salts, which are required for obtaining gelling or thickening characteristics of the carrageenan.

Pectin is a purified carbohydrate product obtained by aqueous extraction of certain edible plant material commonly from citrus fruits or apples. Pectin comprises mainly galacturonic acid and galacturonic acid methyl ester units forming linear polysaccharide chains and is normally classified according to its degree of esterification. For the present invention low methyoxy pectin is utilized. This is pectin in which less than 50% of the carboxyl acid units occur as the methyl ester.

Another important component to the present invention is the utilization of a whipping protein. Whipping proteins are proteins that can be denatured, allowing incorporation of air into a mixture to help in formation of a foam or gel. Whipping proteins that have found utilization in the present invention include soy proteins, egg white proteins, and soluble whey protein isolates such as, for example, Alacen, which is available from New Zealand Milk Products, Inc. Generally, the whipping proteins are utilized in the powdered form, which must be hydrated as described more fully below. The amount of whipping protein utilized in the present invention preferably ranges from 0.1 percent to 5 percent, based on the total weight of the formulation.

The aerated semi-moist gel must also include a source of calcium, a source of cations, and at least one edible acid. The calcium source can comprise any of a variety of calcium-containing compounds such as, for example, dicalcium phosphate, calcium sulfate, calcium chloride, calcium citrate, calcium malate and calcium lactate. The amount of calcium source generally ranges from about 0.05 to 1.5 percent, based on the total weight of the formulation. The cations may be any of a variety of cations including sodium, potassium, and other monovalent or divalent cations. A preferred source of the cation is potassium chloride. The amount of cation utilized is generally in the range of from 0.01 to 1.5 percent, based on the total weight of the formulation.

The acids utilized may comprise any of a variety of edible acids including acids occurring endogenously in the fruit source, citric acid and malic acid. The acids are generally used at levels of from 0.01 percent to 1.5 percent, based on the total weight of the formulation. Preferably, the acids utilized are a mixture of citric acid and malic acid. While calcium is necessary for formation of a gel; the cations and acids are used to adjust the rate of the gel forming reaction to allow for full aeration and incorporation of the other ingredients. The acids are also believed to help in gel formation by promoting unfolding of the protein chains, which allows for better interaction with the ionic hydrocolloid. While not intending to be bound by any theory, it is believed that the whipping protein, alginate, and calcium ions interact to form a network system that leads to formation of the gel. When the formulation does not include cations, such as potassium, the gel formation reaction occurs too quickly such that addition of the other components and the subsequent mixing destroys the gel. The rate of gel setting can be controlled through manipulation of a number of components related to the acid and cations. If the formulation is kept at a colder temperature the gel setting reaction is slowed until the gel is heated, this can be beneficial when forming a bakeable form of the aerated semi-moist gel. Also the particle size of the acid and cation or the water level can be manipulated. If the particle sizes of the cation and acid are larger they take longer to hydrate, thus slowing the gel setting reaction. Likewise, if the water level is lowered the gel setting reaction is slowed. These parameters can be manipulated by one of ordinary skill in the art to achieve the desired reaction rate.

Other ingredients that may be included in the formulation include starches, flavoring agents, coloring agents, gums, dyes, and additional water. Typical starches include unmodified starch, modified starch, and cookup starch. Gums utilized may include gums such as xanthan gum, guar gum, and other common gums. In addition, the aerated food component may include cellulose ingredients such as methylcellulose, a cellulose derivative.

The general method for preparation of the aerated food component is outlined below and specific examples below provide additional details. In a first step, the sweeteners, fruit concentrate, and any color additives are combined with water to form a sweetener slurry unless the sweetener is already in a liquid form containing water. The ionic hydrocolloid and an optional gum, such as, for example, xanthan gum, are then added to the sweetener slurry. The whipping protein is either combined with the sweetener slurry or pre-hydrated with additional water and then added to the slurry. The slurry is then mixed for at least 15 minutes to allow for full hydration of the ionic hydrocolloid and the whipping protein. At this point, the remaining ingredients are added to the slurry and the mixture is mixed at high speed in, for example, a Hobart mixer, for one minute. The formulation begins to aerate during the hydration step and continues during the final high-speed mixing step. Generally the two mixing steps are performed using a whip in the mixer, however, it can be beneficial to switch to a paddle during the final mix step to prevent destruction of the gel. At this point the formulation comprises an aerated semi-moist gel having a moisture content of approximately 14 to 30% and a water activity level of 0.67. The formed gel will remain a gel as long as it is not vigorously mixed after formation of the gel.

As discussed above, the aerated semi-moist gel can be used in a variety of ways. It can be a stand alone marshmallow-type snack. It can be incorporated with cereal pieces or as part of other food products such as Rice Krispies Treais®, granola, toaster pastries, fruit and grain bars, and filled cereal pieces to produce a food product having a moist fruit formulation component. Alternatively, the gel can be extruded under very low pressure of from 34.5 to 586.2 kPa (5 to 85 psi) into a desired shape. Generally, the gel is extruded onto a nonstick surface or a bed of a starch material and allowed to set for at least 90 minutes to fully firm the gel. The firmed gel can then be cut into appropriate sized pieces and then placed in a dryer to produce a crisp, crunchy, aerated cereal additive. The gel can be co-extruded with other materials to form a bakeable product or extruded onto a food product support like a granola bar or other food product. A specific example illustrating preparation of the aerated semi-moist gel and its use is provided below.

**TABLE 1**

| Ingredients | Sample 1 % by weight |
|---|---|
| 55% HFCS | 32.864 |
| Granulated sugar | 32.864 |
| Sugar water for boiling | 7.048 |
| Strawberry puree concentrate | 5.463 |
| Maltodextrin | 7.266 |
| Sodium alginate | 1.442 |
| Starch | 1.049 |
| Strawberry flavor | 0.874 |
| Citric acid | 0.533 |
| Caramel color | 0.245 |
| Xanthan gum | 0.175 |
| Dicalcium phosphate | 0.246 |
| Malic acid | 0.061 |
| Potassium chloride | 0.035 |
| Liquid FD&C red no. 40 | 0.115 |
| Alacen whipping protein | 1.093 |
| Water for whipping protein | 3.934 |
| Methyl Cel A43 | 0.137 |
| K100 | 0.153 |
| Water for Methyl Cel A43 | 4.404 |
| Total | 100.00 |

Sample 1 was prepared by initially combining the 55% HFCS, sugar water for boiling, and the sugar. The mixture was heated to 88% solids and then cooled to 37.8°C (100° F). The cooled mixture was combined with the strawberry puree concentrate, flavor and color and placed in a mixer. The alginate and xanthan gum were blended together and then added to the mixer. The slurry was then mixed with a whip at high speed for at least 15 minutes to hydrate the alginate. The Methyl Cel A43 and K100, celluloses, were combined with the water for Methyl Cel A43 in a blender and mixed on high until the Methyl Cel and K100 had dissolved. This Methyl Cel mixture was held for 20 minutes. To the slurry was added the water for the whipping protein, the whipping protein, and the Methyl Cel mixture. This combination was aerated by mixing using a paddle on high speed for 5 minutes. Finally, the remaining ingredients were added and the mixture mixed on high speed for an additional 1 minute.

The gel formed from sample 1 was allowed to sit overnight to fully gel. The fully gelled formulation was then cut into cubes and co-extruded with a dough to form a fruit filled snack bar. The snack bar was baked so the internal temperature reached from 65.5 to 93.3°C (150 to 200°F). The baked bar had a good taste and the aerated fruit filling maintained its aerated structure.

Additional cubes of sample 1 were placed into a vacuum dryer set at 70° C, with a vacuum of approximately 28 inches of mercury, for 2 hours. The cubes retained their shape during the vacuum drying and the finished product was crispy in texture. The finished product, an aerated dried food component, which does not form part of the invention, retained its crisp texture for more than 5 minutes in milk. While the example used vacuum drying, any form of drying known to those skilled in the art can be used.

A test was conducted to evaluate replacement of sodium alginate with pectin. The formula is listed in Table 2.

**TABLE 2**

| Ingredient | Sample 2 % by Weight |
|---|---|
| Syrup #1 | 73.136 |
| 30% sodium citrate solution | 0.941 |
| Strawberry puree concentrate | 6.070 |
| Strawberry flavor | 1.165 |
| Liquid Red #40 | 0.129 |
| Caramel color | 0.271 |
| Xanthan gum | 0.196 |
| Low methoxy pectin | 1.176 |
| Water | 4.368 |
| Dried egg whites | 2.184 |
| Instant Clearjel starch | 1.165 |
| Citric acid | 1.063 |
| Malic acid | 0.067 |
| 10DE Maltodextrin | 8.069 |
| Total | 100.000 |

Syrup #1 was prepared by combining 4000 gm 55% HFCS, 4000 gm sugar and 1200 gm water and heating to 118.9°C (246 °F). The syrup was added to a Stephan mixer and allowed to cool to 82.2°C (180°F). The sodium citrate solution, strawberry puree concentrate, flavor and colors were added with mixing to the syrup. Xanthan gum and pectin were added followed by mixing on medium speed for 10 minutes. The mixture was transferred to a 12 qt. bowl affixed with a whip. The dried egg whites were hydrated in water and then added with high speed mixing for 2 min. The remaining ingredients were blended and then added with mixing for an additional minute. The aerated semi-moist gel mass was extruded into ropes and allowed to set over night. There was sufficient calcium in the strawberry puree concentrate to aid in setting the pectin matrix, thus exogenous calcium was not necessary in this example. The ropes were subsequently cut into smaller pieces and dried to form crisp aerated fruit pieces.

A test was conducted to evaluate replacement of sodium alginate with carrageenan. The formula is listed in Table 3.

**TABLE 3**

| Ingredient | Sample 3 % by Weight |
|---|---|
| Syrup #2 | 74.063 |
| Strawberry puree concentrate | 6.157 |
| Strawberry flavor | 1.181 |
| Liquid Red #40 | 0.131 |
| Caramel color | 0.274 |
| Water | 5.227 |
| Dried egg whites | 2.613 |
| Instant Clearjel starch | 1.181 |
| Citric acid | 0.601 |
| Malic acid | 0.068 |
| Dicalcium phosphate | 0.318 |
| 10DE Maltodextrin | 8.186 |
| Total | 100.000 |

Syrup #2 was prepared by combining 60 gm of sugar with 20 gm of carrageenan (Gelcarin XP3451 from FMC). The mixture is stirred into 800 gm of cold, deionized water, followed by heating to 93.3°C (200 °F) to dissolve. The hydrocolloid solution was then added to a mixture of 871 gm of sugar and 931 gm of 55% HFCS followed by heating to 117.8°C (244 °F) to form Syrup #2. The required amount of Syrup #2 was added to a Stephan mixer and allowed to cool to 87.8°C (190°F). Strawberry puree concentrate, flavor and colors were added with mixing on medium speed for 10 minutes. The mixture was transferred to a 12 qt. bowl affixed with a whip. The dried egg whites were hydrated in water and then added with low speed mixing for 1 min. and high speed mixing for 5 min. The remaining ingredients were blended and then added with mixing for an additional minute. The aerated semi-moist gel mass was extruded into ropes on dry dextrose and dried for 30 minutes at 65.5°C (150 °F). The ropes were cooled, cut into small pieces and vacuum dried to form crisp aerated fruit pieces.

A test was conducted to evaluate the compatibility of the aerated semi-moist gel fruit product with cereal components. The formula for sample 4 is shown in Table 4.

**TABLE 4**

| Ingredient | Sample 4 % by weight |
|---|---|
| 55% HFCS | 33.167 |
| 62 DE corn syrup | 18.078 |
| Invert syrup | 10.805 |
| Sugar, granulated | 12.488 |
| Water | 4.461 |
| Strawberry puree concentrate | 6.196 |
| Maltodextrin | 8.241 |
| Sodium alginate | 1.636 |
| Instant Clearjel starch | 1.190 |
| Strawberry flavor | 0.991 |
| Citric acid | 0.605 |
| Caramel color | 0.278 |
| Xanthan gum | 0.198 |
| Dicalcium phosphate | 0.188 |
| Malic acid | 0.069 |
| Potassium chloride | 0.040 |
| Liquid FD&C red no. 40 | 0.130 |
| Alacen, whipping protein | 1.239 |
| Total | 100.00 |

The liquid sweeteners, sugar, strawberry puree, flavor and color were combined in a mixer to form a slurry. The alginate and xanthan gum were then added to the slurry and mixed for 15 minutes to hydrate the alginate. The water was mixed with the Alacen and then it was added to the slurry. The slurry was then aerated by mixing on high speed for approximately 5 minutes using a whip. The whip was then replaced with a paddle and the remaining ingredients were incorporated by mixing on high for 1 minute. The formed semi-moist gel was extruded using a single screw low pressure extruder through a die to form a rope shape. A portion of the rope shaped extrudate was extruded onto a bed of starch and a second portion was extruded onto a bed of soy-rice bubbles. The soy-rice bubbles are very small bubbles of puffed rice-soy material. The ropes were allowed to set for 1 hour to firm the gel. The extruded rope had a very low water activity level and the soy-rice bubbles remained crisp even after the 1 hour period. Thus the aerated food component can be combined with other cereal pieces without loss in the crisp texture of the other cereal pieces. The use of whey protein isolate permits a larger amount of whipping protein to be incorporated into the gel and improves the final gel structure.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. An aerated semi-moist gel comprising a mixture of: a sweetener, a fruit concentrate, an ionic hydrocolloid, soluble calcium, an edible acid, a cation source, and a whipping protein; wherein said semi-moist gel having a moisture content of from 14 to 30% by weight based on the total weight and wherein said soluble calcium comprises dicalcium phosphate, calcium sulfate, calcium chloride, calcium citrate, calcium malate, calcium lactate, and mixtures thereof.

2. An aerated semi-moist gel as recited in Claim 1 wherein said sweetener is present in an amount of from 10 to 90% by weight based on the total weight.

3. An aerated semi-moist gel as recited in Claim 1 wherein said sweetener is present in an amount of from 50 to 70% by weight based on the total weight.

4. An aerated semi-moist gel as recited in Claim 1 wherein said sweetener comprises a mixture of at least two sweeteners.

5. An aerated semi-moist gel as recited in Claim 1 wherein said sweetener comprises high fructose corn syrup, corn syrup, invert syrup, sucrose, fructose, honey, molasses, and mixtures thereof.

6. An aerated semi-moist gel as recited in Claim 5 wherein said high fructose, corn syrup has fructose levels of from 35 to 85% fructose.

7. An aerated semi-moist gel as recited in Claim 1 wherein said ionic hydrocolloid is present in an amount of from 0.1 to 5.0% by weight based on the total weight.

8. An aerated semi-moist gel as recited in Claim 1 wherein said ionic hydrocolloid comprises an alginate, a carrageenan, a low methoxy pectin, or mixtures thereof.

9. An aerated semi-moist gel as recited in Claim 1 wherein said ionic hydrocolloid comprises a sodium alginate.

10. An aerated semi-moist gel as recited in Claim 1 wherein said ionic hydrocolloid comprises a pectin in which 50% or less of the carboxyl acid units occur as the methyl ester.

11. An aerated semi-moist gel as recited in Claim 1 wherein said fruit concentrate is present in an amount of from 1 to 80% by weight based on the total weight.

12. An aerated semi-moist gel as recited in Claim 1 wherein said fruit concentrate is present in an amount of from 5 to 20% by weight based on the total weight.

13. An aerated semi-moist gel as recited in Claim 1 wherein said fruit concentrate is present in an amount of from 5 to 10% by weight based on the total weight.

14. An aerated semi-moist gel as recited in Claim 1 wherein said fruit concentrate comprises a fruit puree, a fruit juice, a fruit juice concentrate, a fruit powder, or mixtures thereof.

15. An aerated semi-moist gel as recited in Claim 1 wherein said fruit concentrate has a Brix value of from 20 to 65.

16. An aerated semi-moist gel as recited in Claim 1 wherein said soluble calcium is present in an amount of from 0.05 to 1.50% by weight.

17. An aerated semi-moist gel as recited in Claim 1 wherein said edible acid is present in an amount of from 0.01 to 1.50% by weight.

18. An aerated semi-moist gel as recited in Claim 1 wherein said edible acid comprises an edible acid present endogenously in said fruit concentrate, citric acid, malic acid, and mixtures thereof.

19. An aerated semi-moist gel as recited in Claim 1 wherein said cation source is present in an amount of from 0.05 to 1.50% by weight.

20. An aerated semi-moist gel as recited in Claim 1 wherein said whipping protein is present in an amount of from 0.1 to 5.0% by weight based on the total weight.

21. An aerated semi-moist gel as recited in Claim 1 wherein said whipping protein comprises a soy protein, an egg white protein, a soluble whey protein isolate, and mixtures thereof.

22. An aerated semi-moist gel as recited in Claim 1 further comprising a starch, a flavoring agent, a coloring agent, a gum, a dye, or mixtures thereof.

23. A method for formation of an aerated semi-moist gel comprising the steps of:
a) providing a sweetener slurry comprising water, a sweetener, and a fruit concentrate;
b) adding to the sweetener slurry an ionic hydrocolloid, a soluble calcium, an edible acid, a cation, and a whipping protein to form a gel formulation; and
c) mixing the gel formulation sufficiently to form an aerated semi-moist gel;
wherein said semi-moist gel having a moisture content of from 14 to 30% by weight based on the total weight and wherein said soluble calcium comprises dicalcium phosphate, calcium sulfate, calcium chloride, calcium citrate, calcium malate, calcium lactate, and mixtures thereof.

24. The method of Claim 23 wherein step a) comprises providing the sweetener at a level of from 10 to 90% based on the total weight of the gel.

25. The method of Claim 23 wherein step a) comprises providing the sweetener at a level of from 50 to70% based on the total weight of the gel.

26. The method of Claim 23 wherein step a) comprises providing a sweetener comprising high fructose corn syrup, corn syrup, invert syrup, sucrose, fructose, honey, molasses, and mixtures thereof.

27. The method of Claim 23 wherein step a) comprises providing the fruit concentrate in an amount of from 1 to 80% based on the total weight of the gel.

28. The method of Claim 23 wherein step a) comprises providing the fruit concentrate in an amount of from 5 to 20% based on the total weight of the gel.

29. The method of Claim 23 wherein step a) comprises providing the fruit concentrate in an amount of from 5 to 10% based on the total weight of the gel.

30. The method of Claim 23 wherein step a) comprises providing a fruit concentrate comprising a fruit puree, a fruit juice, a fruit juice concentrate, a fruit powder, or mixtures thereof.

31. The method of Claim 23 wherein step a) comprises providing a fruit concentrate having a Brix value of from 20 to 65.

32. The method of Claim 23 wherein step b) comprises providing the ionic hydrocolloid in an amount of from 0.1 to 5.0% based on the total weight of the gel.

33. The method of Claim 23 wherein step b) comprises providing an ionic hydrocolloid comprising an alginate, a carrageenan, a low methoxy pectin, or mixtures thereof.

34. The method of Claim 23 wherein step b) comprises providing an ionic hydrocolloid comprising a sodium alginate, a pectin in which 50% or less of the carboxyl acid units occur as the methyl ester, or mixtures thereof.

35. The method of Claim 23 wherein step b) comprises providing the soluble calcium in an amount of from 0.05 to 1.50% by weight, the edible acid in an amount of from 0.01 to 1.50% by weight, and the cation in an amount of from 0.05 to 1.50% by weight, all based on the total weight of the gel.

36. The method of Claim 23 wherein step b) comprises providing a soluble calcium comprising dicalcium phosphate, calcium sulfate, calcium chloride, calcium citrate, calcium malate, calcium lactate, or mixtures thereof; and providing an edible acid comprising an edible acid present endogenously in the fruit concentrate, citric acid, malic acid, or mixtures thereof.

37. The method of Claim 23 wherein step b) comprises providing the whipping protein in an amount of from 0.1 to 5.0% by weight based on the total weight of the gel.

38. The method of Claim 23 wherein step b) comprises providing a whipping protein comprising a soy protein, an egg white protein, a soluble whey protein isolate, and mixtures thereof.

39. The method of Claim 23 wherein step b) further comprises adding a starch, a gum, a flavoring agent, a coloring agent, a dye, or mixtures thereof to the sweetener slurry.

40. The method of Claim 23 comprising the further steps of allowing the gel to firm and then forming the gel into a plurality of pieces having a final moisture content of from 14 to 30% by weight.

41. The method of Claim 23 comprising the further step of combining the aerated semi-moist gel with cereal pieces or food products to form a combined food product.

42. The method of Claim 23 comprising the further step of extruding the aerated semi-moist gel at a pressure of from 34.5 to 586.2 kPa (5 to 85 pounds per square inch) to form an extrudate.

43. The method of Claim 42 further comprising the step of extruding the aerated semi-moist gel onto a food product support.

44. The method of Claim 23 comprising the further step of co-extruding the aerated semi-moist gel with a dough at a pressure of from 34.5 to 586.2 kPa (5 to 85 pounds per square inch) to form a co-extruded product and then baking the co-extruded product.

45. The method of Claim 44 further comprising baking the co-extruded product such that the internal temperature of the co-extruded product reaches a temperature of from 65.5 to 93.3°C (150 to 200 F).

## Patentansprüche

1. Belüftetes, halbfeuchtes Gel, das ein Gemisch umfasst aus: einem süßenden Mittel, einem Fruchtkonzentrat, einem ionischen Hydrokolloid, löslichem Calcium, einer genießbaren Säure, einer Kationenquelle und einem aufschlagbaren Protein, worin das halbfeuchte Gel einen Feuchtigkeitsgehalt von 14 bis 30 Gew.-% basierend auf dem Gesamtgewicht aufweist, und worin das lösliche Calcium Dicalciumphosphat, Calciumsulfat, Calciumchlorid, Calciumcitrat, Calciummalat, Calciumlactat und Gemische davon umfasst.

2. Belüftetes, halbfeuchtes Gel nach Anspruch 1, worin das süßende Mittel in einer Menge von 10 bis 90 Gew.-% basierend auf dem Gesamtgewicht vorliegt.

3. Belüftetes, halbfeuchtes Gel nach Anspruch 1, worin das süßende Mittel in einer Menge von 50 bis 70 Gew.-% basierend auf dem Gesamtgewicht vorliegt.

4. Belüftetes, halbfeuchtes Gel nach Anspruch 1, worin das süßende Mittel ein Gemisch aus mindestens zwei süßenden Mitteln umfasst.

5. Belüftetes, halbfeuchtes Gel nach Anspruch 1, worin das süßende Mittel Maissirup mit hohem Fructosegehalt, Maissirup, Invertsirup, Saccharose, Fructose, Honig, Melasse und Gemische davon umfasst.

6. Belüftetes, halbfeuchtes Gel nach Anspruch 5, worin der Maissirup mit hohem Fructosegehalt Fructosegehalte von 35 bis 85 % Fructose aufweist.

7. Belüftetes, halbfeuchtes Gel nach Anspruch 1, worin das ionische Hydrokolloid in einer Menge von 0,1 bis 5,0 Gew.-% basierend auf dem Gesamtgewicht vorliegt.

8. Belüftetes, halbfeuchtes Gel nach Anspruch 1, worin das ionische Hydrokolloid ein Alginat, ein Carrageen, niederverestertes Pektin oder Gemische davon umfasst.

9. Belüftetes, halbfeuchtes Gel nach Anspruch 1, worin das ionische Hydrokolloid ein Natriumalginat umfasst.

10. Belüftetes, halbfeuchtes Gel nach Anspruch 1, worin das ionische Hydrokolloid ein Pektin umfasst, bei dem 50 % oder weniger der Carboxylsäureeinheiten als die Methylester vorkommen.

11. Belüftetes, halbfeuchtes Gel nach Anspruch 1, worin das Fruchtkonzentrat in einer Menge von 1 bis 80 Gew.-% basierend auf dem Gesamtgewicht vorliegt.

12. Belüftetes, halbfeuchtes Gel nach Anspruch 1, worin das Fruchtkonzentrat in einer Menge von 5 bis 20 Gew.-% basierend auf dem Gesamtgewicht vorliegt.

13. Belüftetes, halbfeuchtes Gel nach Anspruch 1, worin das Fruchtkonzentrat in einer Menge von 5 bis 10 Gew.-% basierend auf dem Gesamtgewicht vorliegt.

14. Belüftetes, halbfeuchtes Gel nach Anspruch 1, worin das Fruchtkonzentrat ein Fruchtpüree, einen Fruchtsaft, ein Fruchtsaftkonzentrat, ein Fruchtpulver oder Gemische davon umfasst.

15. Belüftetes, halbfeuchtes Gel nach Anspruch 1, worin das Fruchtkonzentrat einen Brix-Wert von 20 bis 65 aufweist.

16. Belüftetes, halbfeuchtes Gel nach Anspruch 1, worin das lösliche Calcium in einer Menge von 0,05 bis 1,50 Gew.-% vorliegt.

17. Belüftetes, halbfeuchtes Gel nach Anspruch 1, worin die genießbare Säure in einer Menge von 0,01 bis 1,50 Gew.-% vorliegt.

18. Belüftetes, halbfeuchtes Gel nach Anspruch 1, worin die genießbare Säure eine in dem Fruchtkonzentrat endogen vorliegende genießbare Säure, Zitronensäure, Äpfelsäure und Gemische davon umfasst.

19. Belüftetes, halbfeuchtes Gel nach Anspruch 1, worin die Kationenquelle in einer Menge von 0,05 bis 1,50 Gew.-% vorliegt.

20. Belüftetes, halbfeuchtes Gel nach Anspruch 1, worin das aufschlagbare Protein in einer Menge von 0,1 bis 5,0 Gew.-% basierend auf dem Gesamtgewicht vorliegt.

21. Belüftetes, halbfeuchtes Gel nach Anspruch 1, worin das aufschlagbare Protein ein Sojaprotein, ein Eiweißprotein, ein lösliches Molkeproteinisolat und Gemische davon umfasst.

22. Belüftetes, halbfeuchtes Gel nach Anspruch 1, ferner umfassend eine Stärke, einen Geschmacksstoff, ein Färbemittel, einen Pflanzengummi, einen Farbstoff oder Gemische davon.

23. Verfahren zur Bildung eines belüfteten, halbfeuchten Gels, umfassend die Schritte von:
a) Bereitstellen einer Aufschlämmung aus süßendem Mittel, welche Wasser, ein süßendes Mittel und ein Fruchtkonzentrat umfasst;
b) Zugabe eines ionischen Hydrokolloids, eines löslichen Calciums, einer genießbaren Säure, eines Kations und eines aufschlagbaren Proteins zu der Aufschlämmung aus süßendem Mittel zum Bilden einer Gelformulierung; und
c) ausreichendes Mischen der Gelformulierung, um ein belüftetes, halbfeuchtes Gel zu bilden;
worin das halbfeuchte Gel einen Feuchtigkeitsgehalt von 14 bis 30 Gew.-% basierend auf dem Gesamtgewicht aufweist, und worin das lösliche Calcium Dicalciumphosphat, Calciumsulfat, Calciumchlorid, Calciumcitrat, Calciummalat, Calciumlactat und Gemische davon umfasst.

24. Verfahren nach Anspruch 23, wobei Schritt a) Bereitstellen des süßenden Mittels in einer Höhe von 10 bis 90 % basierend auf dem Gesamtgewicht des Gels umfasst.

25. Verfahren nach Anspruch 23, wobei Schritt a) Bereitstellen des süßenden Mittels in einer Höhe von 50 bis 70 % basierend auf dem Gesamtgewicht des Gels umfasst.

26. Verfahren nach Anspruch 23, wobei Schritt a) Bereitstellen eines süßenden Mittels umfasst, das Maissirup mit hohem Fructosegehalt, Maissirup, Invertsirup, Saccharose, Fructose, Honig, Melasse und Gemische davon umfasst.

27. Verfahren nach Anspruch 23, wobei Schritt a) Bereitstellen des Fruchtkonzentrats in einer Menge von 1 bis 80 % basierend auf dem Gesamtgewicht des Gels umfasst.

28. Verfahren nach Anspruch 23, wobei Schritt a) Bereitstellen des Fruchtkonzentrats in einer Menge von 5 bis 20 % basierend auf dem Gesamtgewicht des Gels umfasst.

29. Verfahren nach Anspruch 23, wobei Schritt a) Bereitstellen des Fruchtkonzentrats in einer Menge von 5 bis 10 % basierend auf dem Gesamtgewicht des Gels umfasst.

30. Verfahren nach Anspruch 23, wobei Schritt a) Bereitstellen eines Fruchtkonzentrats umfasst, welches ein Fruchtpüree, einen Fruchtsaft, ein Fruchtsaftkonzentrat, ein Fruchtpulver oder Gemische davon umfasst.

31. Verfahren nach Anspruch 23, wobei Schritt a) Bereitstellen eines Fruchtkonzentrats mit einem Brix-Wert von 20 bis 65 umfasst.

32. Verfahren nach Anspruch 23, wobei Schritt b) Bereitstellen des ionischen Hydrokolloids in einer Menge von 0,1 bis 5,0 % basierend auf dem Gesamtgewicht des Gels umfasst.

33. Verfahren nach Anspruch 23, wobei Schritt b) Bereitstellen eines ionischen Hydrokolloids umfasst, welches ein Alginat, ein Carrageen, ein niederverestertes Pektin oder Gemische davon umfasst.

34. Verfahren nach Anspruch 23, wobei Schritt b) Bereitstellen eines ionischen Hydrokolloids umfasst, welches ein Natriumalginat, ein Pektin, bei dem 50 % oder weniger der Carboxylsäureeinheiten als die Methylester vorkommen, oder Gemische davon umfasst.

35. Verfahren nach Anspruch 23, wobei Schritt b) umfasst Bereitstellen des löslichen Calciums in einer Menge von 0,05 bis 1,50 Gew.-%, der genießbaren Säure in einer Menge von 0,01 bis 1,50 Gew.-% und des Kations in einer Menge von 0,05 bis 1,50 Gew.-%, wobei alle auf dem Gesamtgewicht des Gels basieren.

36. Verfahren nach Anspruch 23, wobei Schritt b) umfasst Bereitstellen eines löslichen Calciums, welches Dicalciumphosphat, Calciumsulfat, Calciumchlorid, Calciumcitrat, Calciummalat, Calciumlactat oder Gemische davon umfasst; und Bereitstellen einer genießbaren Säure, welche eine in dem Fruchtkonzentrat endogen vorliegende genießbare Säure, Zitronensäure, Äpfelsäure oder Gemische davon umfasst.

37. Verfahren nach Anspruch 23, wobei Schritt b) Bereitstellen des aufschlagbaren Proteins in einer Menge von 0,1 bis 5,0 Gew.-% basierend auf dem Gesamtgewicht des Gels umfasst.

38. Verfahren nach Anspruch 23, wobei Schritt b) Bereitstellen eines aufschlagbaren Proteins umfasst, welches ein Sojaprotein, ein Eiweißprotein, ein lösliches Molkeproteinisolat und Gemische davon umfasst.

39. Verfahren nach Anspruch 23, wobei Schritt b) ferner Zugabe einer Stärke, eines Pflanzengummis, eines Geschmacksstoffs, eines Färbemittels, eines Farbstoffs oder Gemische davon zu der Aufschlämmung aus süßendem Mittel umfasst.

40. Verfahren nach Anspruch 23, welches die weiteren Schritte umfasst von Ermöglichen eines Verfestigens des Gels und dann Bilden des Gels in mehrere Stücke mit einem Endfeuchtigkeitsgehalt von 14 bis 30 Gew.-%.

41. Verfahren nach Anspruch 23, welches den weiteren Schritt eines Verbindens des belüfteten, halbfeuchten Gels mit Cerealienstücken oder Nahrungsmittelprodukten umfasst, um ein zusammengesetztes Nahrungsmittelprodukt zu bilden.

42. Verfahren nach Anspruch 23, weiches den weiteren Schritt eines Extrudierens des belüfteten, halbfeuchten Gels bei einem Druck von 34,5 bis 586,2 kPa (5 bis 85 Pfund pro Quadratinch) umfasst, um ein Extrudat zu bilden.

43. Verfahren nach Anspruch 42, welches ferner umfasst den Schritt eines Extrudierens des belüfteten, halbfeuchten Gels auf einen Träger aus einem Nahrungsmittelprodukt.

44. Verfahren nach Anspruch 23, welches den weiteren Schritt umfasst eines Extrudierens des belüfteten, halbfeuchten Gels zusammen mit einem Teig bei einem Druck von 34,5 bis 586,2 kPa (5 bis 85 Pfund pro Quadratinch) zum Bilden eines zusammen extrudierten Produkts und dann Backen des zusammen extrudierten Produkts.

45. Verfahren nach Anspruch 44, ferner umfassend Backen des zusammen extrudierten Produkts, so dass die innere Temperatur des zusammen extrudierten Produkts eine Temperatur von 65,5 bis 93,3 °C (150 bis 200 F) erreicht.

## Revendications

1. Un gel aéré semi humide comprenant un mélange de : un édulcorant, un concentré de fruit, un hydrocolloïde ionique, du calcium soluble, un acide comestible, une source de cation, et une protéine de gonflement ; dans lequel ledit gel semi humide a un taux d'humidité de 14 à 30 % en poids basé sur le poids total et dans lequel ledit calcium soluble comprend du phosphate dicalcique, du sulfate de calcium, du chlorure de calcium, du citrate de calcium, du malate de calcium, du lactate de calcium, et des mélanges de ceux-ci.

2. Un gel aéré semi humide tel que décrit dans la revendication 1 dans lequel ledit édulcorant est présent dans une quantité de 10 à 90 % en poids basé sur le poids total.

3. Un gel aéré semi humide tel que décrit dans la revendication 1 dans lequel ledit édulcorant est présent dans une quantité de 50 à 70 % en poids basé sur le poids total.

4. Un gel aéré semi humide tel que décrit dans la revendication 1 dans ledit édulcorant comprend un mélange d'au moins deux édulcorants.

5. Un gel aéré semi humide tel que décrit dans la revendication 1 dans lequel édulcorant comprend du sirop de maïs à haute teneur en fructose, du sirop de maïs, du sirop inverti, du sucrose, du fructose, du miel, de la mélasse, et des mélanges de ceux-ci.

6. Un gel aéré semi humide tel que décrit dans la revendication 1 dans lequel ledit sirop de maïs à haute teneur en fructose a des taux de fructose de 35 à 85 %.

7. Un gel aéré semi humide tel que décrit dans la revendication 1 dans lequel ledit hydrocolloïde ionique est présent dans une quantité de 0.1 à 5.0 % en poids basé sur le poids total.

8. Un gel aéré semi humide tel que décrit dans la revendication 1 dans lequel ledit hydrocolloïde ionique comprend un alginate, un carragénane, une pectine faiblement méthoxylée, or des mélanges de ceux-ci.

9. Un gel aéré semi humide tel que décrit dans la revendication 1 dans lequel ledit hydrocolloïde ionique comprend un alginate de sodium.

10. Un gel aéré semi humide tel que décrit dans la revendication 1 dans lequel ledit hydrocolloïde ionique comprend une pectine dans laquelle 50 % ou moins des unités acide carboxylique se présentent comme ester méthylique.

11. Un gel aéré semi humide tel que décrit dans la revendication 1 dans lequel ledit concentré de fruit est présent dans une quantité de 1 à 80 % en poids basé sur le poids total.

12. Un gel aéré semi humide tel que décrit dans la revendication 1 dans lequel ledit concentré de fruit est présent dans une quantité de 5 à 20 % en poids basé sur le poids total.

13. Un gel aéré semi humide tel que décrit dans la revendication 1 dans lequel ledit concentré de fruit est présent dans une quantité de 5 à 10 % en poids basé sur le poids total.

14. Un gel aéré semi humide tel que décrit dans la revendication 1 dans lequel ledit concentré de fruit comprend une purée de fruit, un jus de fruit, un concentré de jus de fruit, une poudre de fruit, ou des mélanges de ceux-ci.

15. Un gel aéré semi humide tel que décrit dans la revendication 1 dans lequel ledit concentré de fruit a une valeur de Brix de 20 à 65.

16. Un gel aéré semi humide tel que décrit dans la revendication 1 dans lequel ledit calcium soluble est présent dans une quantité de 0.05 à 1.50 % en poids.

17. Un gel aéré semi humide tel que décrit dans la revendication 1 dans lequel ledit acide comestible est présent dans une quantité de 0.05 à 1.50 % en poids.

18. Un gel aéré semi humide tel que décrit dans la revendication 1 dans lequel ledit acide comestible comprend un acide comestible présent à l'état endogène dans ledit concentré de fruit, de l'acide citrique, de l'acide malique, et des mélanges de ceux-ci.

19. Un gel aéré semi humide tel que décrit dans la revendication 1 dans lequel ladite source de cation est présente dans une quantité de 0.05 à 1.50 % en poids.

20. Un gel aéré semi humide tel que décrit dans la revendication 1 dans lequel ladite protéine de gonflement est présente dans une quantité de 0.1 à 1.50 % en poids.

21. Un gel aéré semi humide tel que décrit dans la revendication 1 dans lequel ladite protéine de gonflement comprend une protéine de soya, une protéine de blanc d'oeuf, un isolat soluble de protéine de petit-lait, et des mélanges de ceux-ci.

22. Un gel aéré semi humide tel que décrit dans la revendication 1 comprenant en outre un amidon, un agent aromatisant, un agent colorant, une gomme, une teinture, ou des mélanges de ceux-ci.

23. Une méthode pour la formation d'un gel aéré semi humide comprenant les étapes de :
a) fournir une liqueur d'édulcorant comprenant de l'eau, un édulcorant, et un concentré de fruit ;
b) ajouter à la boue d'édulcorant un hydrocolloïde ionique, un calcium soluble, un acide comestible, un cation, et une protéine de gonflement pour former une composition de gel ; et
c) mélanger suffisamment la composition de gel pour former un gel aéré semi humide ;
dans laquelle ledit gel semi humide a un taux d'humidité de 14 à 30 % en poids basé sur le poids total et dans laquelle ledit calcium soluble comprend du phosphate dicalcique, du sulfate de calcium, du chlorure de calcium, du citrate de calcium, du malate de calcium, du lactate de calcium, et des mélanges de ceux-ci.

24. La méthode de la revendication 23 dans laquelle l'étape a) comprend de fournir l'édulcorant à un taux de 10 à 90 % basé sur le poids total du gel.

25. La méthode de la revendication 23 dans laquelle l'étape a) comprend de fournir l'édulcorant à un taux de 50 à 70 % basé sur le poids total du gel.

26. La méthode de la revendication 23 dans laquelle l'étape a) comprend de fournir un édulcorant comprenant du sirop de maïs à haute teneur en fructose, du sirop de maïs, du sirop inverti, du sucrose, du miel, des mélasses, et des mélanges de ceux-ci.

27. La méthode de la revendication 23 dans laquelle l'étape a) comprend de fournir le concentré de fruit dans une quantité de 1 à 80 % basée sur le poids total du gel.

28. La méthode de la revendication 23 dans laquelle l'étape a) comprend de fournir le concentré de fruit dans une quantité de 5 à 20 % basée sur le poids total du gel.

29. La méthode de la revendication 23 dans laquelle l'étape a) comprend de fournir le concentré de fruit dans une quantité de 5 à 10 % basée sur le poids total du gel.

30. La méthode de la revendication 23 dans laquelle l'étape a) comprend de fournir un concentré de fruit comprenant une purée de fruit, un jus de fruit, un concentré de jus de fruit, une poudre de fruit, ou des mélanges de ceux-ci.

31. La méthode de la revendication 23 dans laquelle l'étape a) comprend de fournir un concentré de fruit ayant une valeur de Brix de 25 à 60.

32. La méthode de la revendication 23 dans laquelle l'étape b) comprend de fournir l'hydrocolloïde ionique dans une quantité de 0.1 à 5.0 % basée sur le poids total du gel.

33. La méthode de la revendication 23 dans laquelle l'étape b) comprend de fournir un hydrocolloïde ionique comprenant un alginate de sodium, un carragénane, une pectine faiblement méthoxylée, ou des mélanges de ceux-ci.

34. La méthode de la revendication 23 dans laquelle l'étape b) comprend de fournir un hydrocolloïde ionique comprenant un alginate, une pectine dans laquelle 50 % ou moins des unités acide carboxylique se présentent comme ester méthylique, ou des mélanges de ceux-ci.

35. La méthode de la revendication 23 dans laquelle l'étape b) comprend de fournir le calcium soluble dans une quantité de 0.05 à 1.50 % en poids, l'acide comestible dans une quantité de 0.01 à 1.50 % en poids, et le cation dans une quantité de 0.05 à 1.50 % en poids, tous basés sur le poids total du gel.

36. La méthode de la revendication 23 dans laquelle l'étape b) comprend de fournir un calcium soluble comprenant du phosphate dicalcique, du sulfate de calcium, du chlorure de calcium, du citrate de calcium, du malate de calcium, du lactate de calcium, ou des mélanges de ceux-ci ; et de fournir un acide comestible comprenant un acide comestible présent à l'état endogène dans ledit concentré de fruit, de l'acide citrique, de l'acide malique, ou des mélanges de ceux-ci.

37. La méthode de la revendication 23 dans laquelle l'étape b) comprend de fournir la protéine de gonflement dans une quantité de 0.1 à 5.0 % en poids basée sur le poids total du gel.

38. La méthode de la revendication 23 dans laquelle l'étape b) comprend de fournir une protéine de gonflement comprenant une protéine de soya, une protéine de blanc d'oeuf, un isolat soluble de protéine de petit-lait, et des mélanges de ceux-ci.

39. La méthode de la revendication 23 dans laquelle l'étape b) comprend en outre d'ajouter un amidon, un agent aromatisant, un agent colorant, une gomme, une teinture, ou des mélanges de ceux-ci à la liqueur d'édulcorant.

40. La méthode de la revendication 23 comprenant l'étape additionnelle de laisser le gel s'affermir et de former ensuite le gel en une pluralité de pièces ayant un taux d'humidité final de 14 à 30 % en poids.

41. La méthode de la revendication 23 comprenant l'étape additionnelle de combiner le gel aéré semi humide avec des pièces de céréale ou des produits alimentaires pour former un produit alimentaire combiné.

42. La méthode de la revendication 23 comprenant l'étape additionnelle d'extruder le gel aéré semi humide à une pression de 34.5 à 586.2 kPa (5 à 85 livres par pouce carré) pour former un extrudat.

43. La méthode de la revendication 42 comprenant l'étape additionnelle d'extruder le gel aéré semi humide sur un support en produit alimentaire.

44. La méthode de la revendication 23 comprenant l'étape additionnelle de co-extruder le gel aéré semi humide avec une pâte à une pression de 34.5 à 586.2 kPa (5 à 85 livres par pouce carré) pour former un produit co-extrudé et de cuire ensuite le produit co-extrudé.

45. La méthode de la revendication 44 comprenant en outre de cuire le produit co-extrudé de sorte que la température interne du produit co-extrudé atteigne une température de 65.5 à 93.3° C /150 à 200 F).
